# EUROPÄISCHE PATENTSCHRIFT

(11) **EP 3 078 254 B1**
(45) Veröffentlichungstag und Bekanntmachung des Hinweises auf die Patenterteilung: **07.03.2018**
(21) Anmeldenummer: 16163913.3
(22) Anmeldetag: 05.04.2016
(51) Int. Cl.: A01D 69/02, B60R 16/03, B60L 11/12

(54) **SCHNITTSTELLENVORRICHTUNG**
INTERFACE DEVICE
DISPOSITIF D'INTERFACE

(30) Priorität: 09.04.2015 DE 102015206366
(43) Veröffentlichungstag der Anmeldung: 12.10.2016
(73) Patentinhaber: Deere & Company, Moline, IL 61265 (US)
(72) Erfinder: Gugel, Rainer, 68723 Plankstadt (DE); Böhm, Barbara, 69115 Heidelberg (DE); Fritz, Norbert, 68549 Ilvesheim (DE); Hambloch, Mark, 69115 Heidelberg (DE); Pickel, Peter, 68199 Mannheim (DE)
(74) Vertreter: Dehnhardt, Florian Christopher

(56) Entgegenhaltungen:
- EP-A1- 0 849 112
- DE-A1-102007 024 644
- DE-A1-102010 042 499
- DE-A1-102010 048 673
- US-A1- 2013 162 032

## Beschreibung

Die Erfindung betrifft eine Schnittstellenvorrichtung zur Übertragung einer elektrischen Leistung von einer externen Spannungsversorgung auf eine landwirtschaftliche Arbeitsmaschine, die eine angebaute Generatoreinheit umfasst.
Die DE 10 2010 042 499 A1 beschreibt ein Nutzfahrzeug in Gestalt eines Traktors mit einem integrierten elektrischen Zweig, mit welchem über eine mit dem elektrischen Zweig verbundene Anschlussdose eine externe Stromquelle verbindbar ist. Als nachteilig könnte erachtet werden, dass der elektrische Zweig integraler Bestandteil des Fahrzeugs ist.
Gegenwärtig werden sogenannte Generatoreinheiten entwickelt, die an sich eine autark Infrastruktur aufweisen und auf einfache Weise an ein landwirtschaftliches Arbeitsfahrzeug, beispielsweise einen Traktor, angebaut werden können, um vorzugsweise von der Zapfwelle des Fahrzeugs angetrieben zu werden. Das Ziel der Entwicklung dieser Generatoreinheiten ist es, elektrifizierten Traktoranbaugeräten die von diesen geforderte höhere elektrische Leistung zur Verfügung stellen zu können. Die primäre Energiequelle ist hierbei der Verbrennungsmotor des Fahrzeugs, der regelmäßig als Dieselmotor ausgeführt ist. In dieser beschriebenen Konfiguration bestehend aus Verbrennungsmotor und verbrennungsmotorisch angetriebener Generatoreinheit, kommt dem Verbrennungsmotor weiterhin alleine die Traktionsaufgabe bezüglich des Fahrzeugs zu.
Für die Arbeit auf dem Feld und die Transportarbeit ist gegenwärtig der Verbrennungsmotor nach dem Dieselprinzip die einzig sinnvolle Energiequelle, um elektrifizierte Verbraucher höherer Leistung auf einem Anbaugerät zu versorgen. Es gibt jedoch sogenannte stationäre Anwendungen, die sich dadurch auszeichnen, dass ein Traktionsantrieb des Fahrzeugs nicht benötigt wird und zeitgleich elektrische Energie aus einem elektrischen Netz oder einem elektrischen Speicher zur Verfügung stehen muss. Ein Beispiel für eine solche Anwendung ist das Füllen eines elektrifizierten Güllefasses (Pumpen und Rühren). In diesem Fall ist die Energieversorgung aus einem elektrischen Netz oder einem elektrischen Speicher, beispielsweise von regenerierbarer Energie, gegebenenfalls möglich und dabei wirtschaftlicher und umweltfreundlicher. Der Aufwand solche Anbaugeräte individuell mit Schnittstellen zum Anschluss eine externe elektrische Energiequelle auszustatten ist jedoch unverhältnismäßig hoch, da Infrastruktur in Form von Umrichtern und Steuerungen auf dem Anbaugerät erforderlich wären.

Da ein Großteil der benötigten Infrastruktur für den Netzbetrieb eines elektrifizierten Anbaugeräts bereits auf einer der zuvor beschriebenen Generatoreinheiten vorhanden ist, bietet es sich an, den Netzbetrieb über eine Generatoreinheit vorzusehen.

Ausgehend hiervon besteht die Aufgabe der vorliegenden Erfindung darin, eine Anordnung zum Netzbetrieb eines Anbaugeräts mittels einer Generatoreinheit bereitzustellen.

Die Aufgabe wird gelöst durch eine Schnittstellenvorrichtung zur Übertragung einer elektrischen Leistung von einer externen Spannungsversorgung auf eine landwirtschaftliche Arbeitsmaschine, umfassend eine an die landwirtschaftliche Arbeitsmaschine angebaute Generatoreinheit, die eine elektrische Maschine zur Erzeugung einer Wechselspannung, einen ersten Umrichter zur Einspeisung der Wechselspannung als Gleichspannung in einen Gleichspannungs-Zwischenkreis und einen zweiten Umrichter zur Übertragung der Gleichspannung des Gleichspannungs-Zwischenkreis als Wechselspannung an ein von der Arbeitsmaschine betriebenes Anbaugerät, aufweist und ein Adaptermittel zur elektrischen Verbindung der externen Spannungsversorgung mit einem der Umrichter, um über den Umrichter eine Wechselspannung der externen Spannungsversorgung als Gleichspannung in den Gleichspannungs-Zwischenkreis einzuspeisen.

Durch die Erfindung wird eine an ein Arbeitsfahrzeug anbaubare Generatoreinheit ertüchtigt elektrische Energie aus einem Versorgernetz, einem autarken Inselnetz oder einem elektrischen Speicher zu beziehen, um damit ein elektrifiziertes Anbaugerät bei abgeschaltetem Verbrennungsmotor des Fahrzeugs zu betreiben. In dem Fall, in dem ein Anbaugerät elektrifiziert wurde, um über eine genormte Steckdose, beispielsweise eine AEF-Steckdose, betrieben zu werden, ist für den Netzbetrieb des Anbaugeräts keinerlei Zusatzaufwand erforderlich. Hierdurch ist eine effiziente und wirtschaftliche Nutzung von elektrischer Leistung gegeben, die durch ein bestehendes Stromnetz zur Verfügung gestellt wird. Es kann sich um regenerative Energie handeln. Weiterhin können vorhandene Bedienschnittstellen des Anbaugeräts uneingeschränkt genutzt werden.

Bevorzugt sind die Adaptermittel auf der einen Seite als männlicher AEF-Stecker und auf der anderen Seite als Standard-3-Phasen-Stecker ausgebildet. Hiermit ist Kompatibilität mit einer auf dem Fahrzeug oder auf der Generatoreinheit angeordneten AEF-Steckdose hergestellt. Außerdem ist es hierdurch möglich die Generatoreinheit beziehungsweise das Fahrzeug über ein gewöhnliches 400V-Anschlusskabel mit dem elektrischen Netz zu verbinden.

Bevorzugt können sich die Adaptermittel über ein Ether-CAT-Netzwerk der Arbeitsmaschine identifizieren. Hierbei kann das Identifizieren der Adaptermittel eine Meldung über das Vorliegen der externen Spannungsversorgung beinhaltet. Weiterhin kann eine Leistungsbegrenzung mitgeteilt werden. Sind die Adaptermittel gesteckt, ist der entsprechende Umrichter einer Leistungselektronik der Generatoreinheit deaktiviert. Stattdessen wird eine passive Gleichrichterfunktion des Umrichters verwendet, um elektrische Energie in den Gleichstromzwischenkreis zu speisen.

Bevorzugt umfassen die Adaptermittel einen Netztrennschalter und/oder eine Einschaltdrossel.

Bevorzugt umfasst die Generatoreinheit einen unidirektionalen DC-DC-Wandler, um ein Spannungsnetz der Arbeitsmaschine und/oder des Anbaugeräts mit elektrischer Energie zu versorgen, sobald elektrische Energie im Gleichspannungszwischenkreis vorhanden ist. Hierdurch wird gewährleistet, dass sich die 12V-Batterie des Fahrzeugs nicht entlädt.

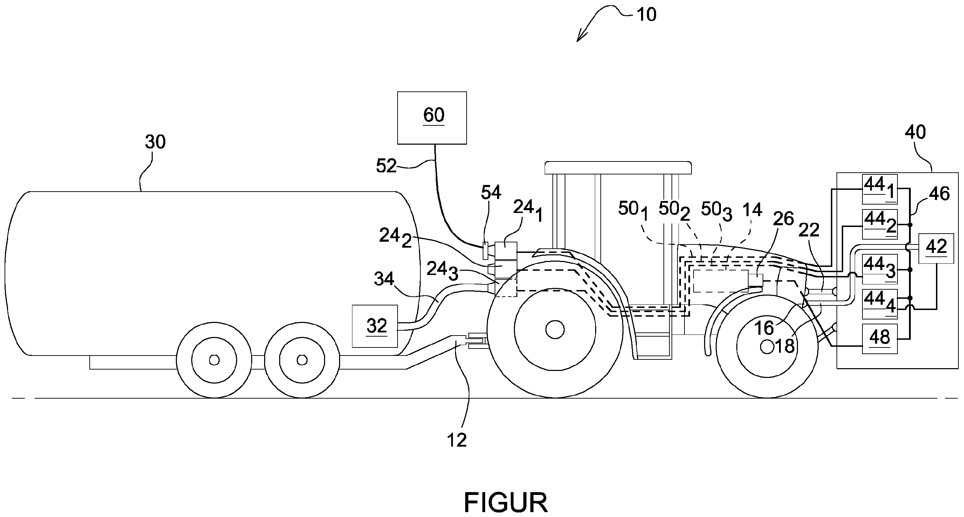

Ein bevorzugtes Ausführungsbeispiel der Erfindung wird anhand der nachfolgenden Figur beschrieben. Die Figur zeigt ein landwirtschaftliches Arbeitsfahrzeug 10 in Gestalt eines Schleppers, an das über eine Zugdeichsel 12 ein Anbaugerät 30 in Gestalt eines Güllefasses gekoppelt sein kann. Das Arbeitsfahrzeug 10 ist von einer Verbrennungskraftmaschine 14 angetrieben, die sowohl über einen nicht näher dargestellten Fahrantrieb das Arbeitsfahrzeug 10 an sich fortbewegen als auch eine vordere Zapfwelle 16 antreiben kann. Alternativ oder zusätzlich kann auch eine Heckzapfwelle vorgesehen sein. An das Arbeitsfahrzeug 10 ist über eine vordere Dreipunktaufhängung 22 eine Generatoreinheit 40 angebaut. Die Generatoreinheit 20 kann alternativ heckseitig angebaut sein. Die Generatoreinheit 40 ist mit der vorderen Zapfwelle 16 des Arbeitsfahrzeugs über eine Gelenkwelle 18 antriebsverbunden. Die Generatoreinheit 40 kann mittels der Zapfwelle 16 angetrieben werden, um eine elektrische Leistung unabhängig von einem Bordnetz des Arbeitsfahrzeugs 10 zu erzeugen. Das Anbaugerät 30 ist ferner über ein Anschlusskabel 34 und einen AEF-Konnektor 24 mit dem Arbeitsfahrzeug 10 verbunden. Eine von der Generatoreinheit 40 erzeugte elektrische Leistung kann über den AEF-Konnektor 24 und das Anschlusskabel 34 einem elektrischen Verbraucher 32 des Anbaugeräts 30 zur Verfügung gestellt werden. Vorliegend ist der elektrische Verbraucher 32 als elektrischer Motor zum Antrieb eine Pumpe und einer Rührvorrichtung des Anbaugeräts 30 in Gestalt des Güllefasses ausgeführt. Hierunter soll eine Elektrifizierung des Anbaugeräts verstanden werden.

Die Generatoreinheit 40 umfasst zunächst eine elektrische Maschine 42, die über die Zapfwelle 16 des Arbeitsfahrzeugs 10 und die Gelenkwelle 18 rotatorisch angetrieben wird, um elektrische Leistung zu erzeugen. Hierbei erfolgt entweder ein unmittelbarer Antrieb der elektrischen Maschine 42 durch die Gelenkwelle 18 oder der Antrieb erfolgt unter Zwischenschaltung einer nicht näher dargestellten Getriebeeinheit zur Drehzahlübersetzung. Weiterhin umfasst die Generatoreinheit 40 mehrere, vorliegend beispielsweise vier, Umrichter 44₁, 44₂, 44₃, 44₄ und einen mit diesen verbundenen Gleichstromzwischenkreis 46. Die elektrische Maschine 42 ist mit einem der vier Umrichter 44₁ -44₄ derart verbunden, dass der von der elektrischen Maschine 42 erzeugte Wechselstrom von dem einen der Umrichter 44₁ -44₄ gleichgerichtet wird und als Gleichstrom in den Gleichstromzwischenkreis 46 gespeist wird. Über die drei nicht mit der elektrischen Maschine 42 verbundenen Umrichter 44₁ -44₃, kann dem Gleichstromzwischenkreis 46 Wechselstrom entnommen werden. In dem vorliegend beschriebenen Ausführungsbeispiel ist jeder der drei Umrichter wechselstromseitig mit einem AEF-Konnektor 24₁, 24₂, 24₃ über eine jeweilige Verbindungsleitung 50₁, 50₂, 50₃ verbunden.

In folgenden wird ein als Netzbetrieb bezeichneter Betriebszustand beschrieben, bei dem kein Antrieb der Generatoreinheit 40 durch die Verbrennungskraftmaschine erfolgt, sondern eine elektrische Leistung über ein externes elektrisches Netz 60 eingespeist wird, wie weiterhin in der Figur eingezeichnet. Bei dem externen elektrischen Netz 50 kann es sich beispielsweise um ein öffentliches Versorgernetz, ein autarkes Inselnetz oder einen elektrischen Speicher mit Entnahmeinfrastruktur handeln. Das elektrische Netz 60 kann über ein Anschlusskabel 52 mit einem der AEF-Konnektoren 24₁, 24₂, 24₃ des Arbeitsfahrzeugs 10 unter Zwischenschaltung eines Netz-Traktor-Adaptermittels 54 verbunden werden. Die Netz-Traktor-Adaptermittel 54 können auf der einer Seite einen männlichen AEF-Stecker, kompatibel zum AEF-Konnektor, und auf der anderen Seite einen standardisierten, männlichen 3-Phasen 400V-Stecker haben. Das ermöglicht das Verbinden des Traktors mit dem Netz über ein standardisiertes Anschlusskabel 52, welches beispielsweise auf 400V ausgelegt ist. Die Netz-Traktor-Adaptermittel 54 können sich beim Einschalten des Arbeitsfahrzeugs 10 über das EtherCAT-Netzwerk identifiziert und teilen dem Arbeitsfahrzeug 10 die Betriebsart Netzbetrieb sowie gegebenenfalls eine Leistungsbegrenzung mit. Die Netz-Traktor-Adaptermittel 54 kann einen Netz-Trennschalter sowie Einschaltdrosseln beinhalten. Sind die Netz-Traktor-Adaptermittel 54 gesteckt, wird der entsprechende Umrichter 44₁ -44₃ niemals eingeschaltet, sondern es wird lediglich dessen passive Gleichrichterfunktion verwendet, um elektrische Leistung in den Gleichstromzwischenkreis 46 zu speisen. Weiterhin ist mit dem Gleichstromzwischenkreis 46 ein unidirektionaler DC-DC-Wandler 48 verbunden, der ausgangsseitig mit einem 12V-Netz des Arbeitsfahrzeug 10 und bedarfsweise des Anbaugeräts 30 verbunden ist. Sobald elektrische Energie im Gleichstromzwischenkreis 46 vorhanden ist, kann das 12V-Netz des Arbeitsfahrzeugs 10 mit Spannung versorgt werden, so dass eine Batterie 26 der Verbrennungskraftmaschine 14 nicht entladen wird.

Weiterhin ist ein Steuerungssoftware für die Generatoreinheit 20 vorgesehen, die die Generatoreinheit 20 am Arbeitsfahrzeug 10 als virtuelles Anbaugerät anmeldet, so dass die nicht von dem Netz-Traktor-Adaptermittel 54 belegten AEF-Konnektoren 24₁, 24₂, 24₃ zum Betrieb von elektrischen Verbrauchern auf dem Anbaugerät 30 zur Verfügung stehen. In der Figur ist beispielsweise das Anbaugerät 30 über das Anschlusskabel 34 mit dem AEF-Konnektor 24₂ verbunden.

### Bezugszeichenliste

- 10: landwirtschaftliches Arbeitsfahrzeug
- 12: Zugdeichsel
- 14: Verbrennungskraftmaschine
- 16: Zapfwelle
- 18: Gelenkwelle
- 20: Generatoreinheit
- 22: Dreipunktaufhängung
- 24: AEF-Konnektor
- 26: Batterie
- 30: Anbaugerät
- 32: elektrischer Verbraucher
- 34: Anschlusskabel
- 40: Generatoreinheit
- 42: elektrische Maschine
- 44: Umrichter
- 46: Gleichstromzwischenkreis
- 48: DC-DC-Wandler
- 50: Verbindungsleitung
- 52: Anschlusskabel
- 54: Adaptermittel
- 60: elektrisches Netz

## Patentansprüche

1. Schnittstellenvorrichtung zur Übertragung einer elektrischen Leistung von einer externen Spannungsversorgung auf eine landwirtschaftliche Arbeitsmaschine (10), umfassend
eine an die landwirtschaftliche Arbeitsmaschine (10) angebaute Generatoreinheit (20, 40), die eine elektrische Maschine (42) zur Erzeugung einer Wechselspannung,
einen ersten Umrichter (441)zur Einspeisung der Wechselspannung als Gleichspannung in einen Gleichspannungs-Zwischenkreis (46)und
einen zweiten Umrichter (442) zur Übertragung der Gleichspannung des Gleichspannungs-Zwischenkreises (46) als Wechselspannung an ein von der Arbeitsmaschine (10) betriebenes Anbaugerät (30), aufweist und
ein Adaptermittel (54) zur elektrischen Verbindung der externen Spannungsversorgung mit einem der Umrichter (44), um über den Umrichter eine Wechselspannung der externen Spannungsversorgung als Gleichspannung in den Gleichspannungs-Zwischenkreis (46) einzuspeisen.

2. Schnittstellenvorrichtung nach Anspruch 1, **dadurch gekennzeichnet, dass** die Adaptermittel (54) auf der einen Seite als männlicher AEF-Stecker und auf der anderen Seite als Standard-3-Phasen-Stecker ausgebildet sind.

3. Schnittstellenvorrichtung nach Anspruch 1 oder 2, **dadurch gekennzeichnet, dass** sich die Adaptermittel (54) über ein Ether-CAT-Netzwerk der Arbeitsmaschine (10) identifizieren können.

4. Schnittstellenvorrichtung nach Anspruch 3, **dadurch gekennzeichnet, dass** das Identifizieren der Adaptermittel (54) eine Meldung über das Vorliegen der externen Spannungsversorgung beinhaltet.

5. Schnittstellenvorrichtung nach einem der Ansprüche 1 bis 4, **dadurch gekennzeichnet, dass** die Adaptermittel (54) einen Netztrennschalter und/oder eine Einschaltdrossel umfassen.

6. Schnittstellenvorrichtung nach einem der Ansprüche 1 bis 4, **dadurch gekennzeichnet, dass** die Generatoreinheit (20, 40) einen unidirektionalen DC-DC-Wandler (48) umfasst, um ein Spannungsnetz der Arbeitsmaschine (10) und/oder des Anbaugeräts (30) mit elektrischer Energie zu versorgen, sobald elektrische Energie im Gleichspannungs-Zwischenkreis (46) vorhanden ist.

## Claims

1. Interface device for transmitting electrical power from an external voltage supply to an agricultural working machine (10), comprising
a generator unit (20, 40) attached to the agricultural working machine (10), said generator unit having an electric machine (42) for generating an AC voltage,
a first converter (441) for feeding the AC voltage to a DC link (46) as DC voltage, and
a second converter (442) for transmitting the DC voltage of the DC link (46) to an attachment device (30) operated by the working machine (10) as AC voltage, and
adapter means (54) for electrically connecting the external voltage supply to one of the converters (44) in order to feed an AC voltage of the external voltage supply to the DC link (46) as DC voltage by means of the converter.

2. Interface device according to Claim 1, **characterized in that** the adapter means (54) are configured on the one side as a male AEF connector and on the other side as a standard 3-phase connector.

3. Interface device according to Claim 1 or 2, **characterized in that** the adapter means (54) can be identified by means of an EtherCAT network of the working machine (10).

4. Interface device according to Claim 3, **characterized in that** the identification of the adapter means (54) contains a message about the presence of the external voltage supply.

5. Interface device according to one of Claims 1 to 4, **characterized in that** the adapter means (54) comprise a network isolating switch and/or a switching reactor coil.

6. Interface device according to one of Claims 1 to 4, **characterized in that** the generator unit (20, 40) comprises a unidirectional DC-DC converter (48) in order to supply electrical energy to a voltage network of the working machine (10) and/or of the attachment device (30) as soon as electrical energy is present in the DC link (46).

## Revendications

1. Dispositif d'interface destiné à transmettre une puissance électrique d'une alimentation en tension externe à une machine de travail agricole (10) comprenant
une unité génératrice (20, 40) montée sur la machine de travail agricole (10), qui comporte
une machine électrique (42) destinée à générer une tension alternative,
un premier onduleur (441) destiné à délivrer à un circuit intermédiaire à tension continue (46) la tension alternative sous la forme d'une tension continue et
un deuxième onduleur (442) destiné à transférer la tension continue du circuit intermédiaire à tension continue (46) sous la forme d'une tension alternative à un équipement (30) entraîné par la machine de travail (10) et
un moyen adaptateur (54) destiné à relier électriquement l'alimentation en tension externe à l'un des onduleurs (44), afin de délivrer au circuit intermédiaire à tension continue (46), par l'intermédiaire des onduleurs, une tension alternative de l'alimentation en tension externe sous la forme d'une tension continue.

2. Dispositif d'interface selon la revendication 1, **caractérisé en ce que** les moyens adaptateurs (54) sont réalisés d'une part sous la forme de connecteurs AEF mâles et d'autre part sous la forme de connecteurs triphasés classiques.

3. Dispositif d'interface selon la revendication 1 ou 2, **caractérisé en ce que** les moyens adaptateurs (54) peuvent s'identifier par l'intermédiaire d'un réseau Ether-CAT de la machine de travail (10).

4. Dispositif d'interface selon la revendication 3, **caractérisé en ce que** l'identification des moyens adaptateurs (54) comprend un message indiquant la présence de l'alimentation en tension externe.

5. Dispositif d'interface selon l'une quelconque des revendications 1 à 4, **caractérisé en ce que** les moyens adaptateurs (54) comprennent un disjoncteur et/ou un interrupteur de mise en circuit.

6. Dispositif d'interface selon l'une quelconque des revendications 1 à 4, **caractérisé en ce que** l'unité génératrice (20, 40) comprend un convertisseur continu-continu unidirectionnel (48) destiné à alimenter en énergie électrique un réseau de tension de la machine de travail (10) et/ou de l'équipement (30) dès que de l'énergie électrique est présente dans le circuit intermédiaire à tension continue (46).
